# EUROPÄISCHE PATENTSCHRIFT

(11) **EP 2 190 699 B1**
(45) Veröffentlichungstag und Bekanntmachung des Hinweises auf die Patenterteilung: **02.03.2011**
(21) Anmeldenummer: 08804725.3
(22) Anmeldetag: 25.09.2008
(51) Int. Cl.: B60R 21/264

(54) **BRENNKAMMERBAUEINHEIT FÜR EIN AIRBAGMODUL**
COMBUSTION CHAMBER UNIT FOR AN AIRBAG MODULE
ENSEMBLE CHAMBRE DE COMBUSTION POUR MODULE SAC GONFLABLE

(30) Priorität: 26.09.2007 DE 102007046822
(43) Veröffentlichungstag der Anmeldung: 02.06.2010
(73) Patentinhaber: Takata-Petri AG, 63743 Aschaffenburg (DE)
(72) Erfinder: KIMMICH, Stephen, 63785 Obernburg (DE); WINDHAUSEN, Björn, 63773 Goldbach (DE)
(74) Vertreter: Baumgärtel, Gunnar
(86) Internationale Anmeldenummer: PCT/EP2008/062827
(87) Internationale Veröffentlichungsnummer: WO 2009/043787

(56) Entgegenhaltungen:
- WO-A-00/44593
- WO-A-97/17235
- DE-U1-202005 011 657
- US-A1- 2007 210 567

## Beschreibung

Die Erfindung betrifft eine Brennkammerbaueinheit für ein Airbagmodul eines Kraftfahrzeugs nach dem Oberbegriff des Anspruchs 1.

Eine derartige Brennkammerbaueinheit umfasst ein eine Brennkammer umschließendes Brennkammergehäuse sowie eine Brennkammeraufnahme, in der das Brennkammergehäuse anzuordnen ist, so dass das Brennkammergehäuse mit einer äußeren Oberfläche an einer inneren Oberfläche der Gehäuseaufnahme anliegt, wobei in dem Brennkammergehäuse einerseits und der Gehäuseaufnahme andererseits jeweils Austrittsbereiche vorgesehen sind, die bei bestimmungsgemäßer Anordnung des Brennkammergehäuses in der Gehäuseaufnahme derart räumlich zueinander angeordnet sind, z.B. einander derart überdecken, dass in der Brennkammer erzeugtes Gas durch die Austrittsbereiche des Brennkammergehäuses und der Gehäuseaufnahme hindurch in die Umgebung austreten kann, um hiermit einen Gassack des Airbagmodules aufblasen zu können.

Bei dem Brennkammergehäuse handelt es sich vorliegend um eine Baugruppe, in der ein Treibstoff, insbesondere ein Festtreibstoff, enthalten sein kann, aus dem nach Zündung mittels einer zugeordneten Zündeinrichtung ein Gas erzeugbar ist, mit dem ein Gassack des Airbagmodules aufblasbar ist, um hiermit in einem Crash-Fall ein Gaskissen für eine zu schützende Person zu Verfügung zu stellen. Um ein Ausströmen des in der Brennkammer erzeugten Gases in die Umgebung zu ermöglichen, so dass in der Brennkammer erzeugtes Gas zum Aufblasen eines Gassackes genutzt werden kann, sind im Brennkammergehäuse die erwähnten Austrittsbereiche, z.B. in Form von Austrittsöffnungen, vorgesehen.

Durch die Anordnung der Brennkammer bzw. konkret des Brennkammergehäuses in einer zugeordneten Gehäuseaufnahme kann die Brennkammer an einer definierten Stelle in oder an einem Kraftfahrzeug gehalten werden. Damit die Gehäuseaufnahme einem Ausströmen der in der Brennkammer erzeugten Gase in einen aufzublasenden Gassack nicht entgegensteht, sind in der Gehäuseaufnahme weitere Austrittsbereiche, z.B. in Form von Austrittsöffnungen, vorgesehen, welche den brennkammergehäuseseitigen Austrittsbereichen räumlich derart zugeordnet sind, dass die aus dem Brennkammergehäuse freigesetzten Gase durch die gehäuseaufnahmeseitigen Austrittsbereichen hindurch weiter strömen können, um einen aufzublasenden Gassack mit Gas zu befüllen.

Es ist nicht zwingend erforderlich, dass die beiderseitigen Austrittstrittsbereiche exakt miteinander fluchten; je nach konstruktiver Ausgestaltung des Brennkammergehäuses einerseits und der Gehäuseaufnahme andererseits kann auch ein Versatz einander zugeordneter, beiderseitiger Austrittsbereiche vorgesehen sein. Wichtig ist aber, dass die beiderseitigen Austrittsbereiche räumlich so zueinander angeordnet sind, dass in dem Brennkammergehäuse erzeugte Gase durch jene Austrittsbereiche hindurch ausströmen können, um einen zugeordneten Gassack zu befüllen.

Der Erfindung liegt das Problem zugrunde, eine Brennkammerbaueinheit der eingangs genannten Art zu schaffen, die mit einfachen Mitteln eine zuverlässige Positionierung des Brennkammergehäuses an der Gehäuseaufnahme ermöglicht.

Dieses Problem wird erfindungsgemäß durch die Schaffung einer Brennkammerbaueinheit mit den Merkmalen des Anspruchs 1 gelöst.

Danach ist am Brennkammergehäuse und/oder an der Gehäuseaufnahme mindestens eine Ausformung so ausgebildet, dass im Bereich dieser Ausformung zwischen der äußeren Oberfläche des Brennkammergehäuses und der inneren Oberfläche der zugeordneten Gehäuseaufnahme ein Expansionsraum definiert ist, der beim bestimmungsgemäßen Anordnen des Brennkammergehäuses in der Gehäuseaufnahme (also während einer Montage der Brennkammerbaueinheit) durch eine Deformation eines Abschnittes des Brennkammergehäuses in jenen Expansionsraum hinein zumindest teilweise mit Material jenes Abschnittes des Brennkammergehäuses gefüllt wird.

Dadurch, dass das Brennkammergehäuse und die zugeordnete Gehäuseaufnahme in dem durch eine Ausformung definierten Expansionsraum ineinander greifen, wird eine definierte und dauerhafte Positionierung dieser beiden Baugruppen zueinander ermöglicht. Das Brennkammergehäuse wird somit definiert in der Gehäuseaufnahme festgelegt.

Bei den einander zugeordneten Austrittsbereichen des Brennkammergehäuses und der Gehäuseaufnahme kann es sich einerseits um von Anfang an bestehende Austrittsöffnungen handeln oder andererseits um Bereiche des Brennkammergehäuses und/oder gegebenenfalls der Gehäuseaufnahme, in denen erst durch den beim Verbrennen eines Treibstoffes im Brennkammergehäuse auftretenden Druck Austrittsöffnungen geschaffen werden. Insbesondere kann vorgesehen sein, dass an der Gehäuseaufnahme bereits von Anfang an Austrittsöffnungen vorhanden sind, während die zugeordneten Austrittsöffnungen im Brennkammergehäuse erst durch den auf die Wände des Brennkammergehäuses wirkenden Druck erzeugt werden, der bei chemischer Umwandlung eines im Brennkammergehäuse vorgesehenen Treibstoffes in ein zum Aufblasen eines Gassackes dienenden Gases auftritt.

Zwar ist aus der DE 20 2005 011 657 U1 bereits ein Gasgenerator-Siebeinsatz bekannt, der im Querschnitt kreisringförmig ausgestaltet ist und der nach innen verlaufende Einbuchtungen zu Schaffung von Expansionsräumen aufweist; jedoch soll in diese Expansionsräumen kein deformierbarer Bereich einer anderen Komponente eines Gasgenerators hinein verformt werden, sondern sie dienen vielmehr der Zufuhr von Gas zu Abströmöffnungen. Der Ausgleich von Toleranzen wird dabei dadurch ermöglicht, dass der Siebeinsatz als ein offener Ring ausgestaltet ist.

Das Brennkammergehäuse kann hinsichtlich seiner äußeren Abmessungen derart bezüglich der inneren Abmessungen der Gehäuseaufnahme dimensioniert sein, dass während des Anordnens des Brennkammergehäuses in der Gehäuseaufnahme die innere Oberfläche der Gehäuseaufnahme einen nach innen gerichteten Druck auf die äußere Oberfläche des Brennkammergehäuses ausübt und dementsprechend das Brennkammergehäuse unter diesem Druck in mindestens einem Abschnitt des Brennkammergehäuses in den hierfür vorgesehenen Expansionsraum hinein deformiert wird. Konkret kann das in der Gehäuseaufnahme anzuordnende Brennkammergehäuse hierzu entlang mindestens einer Raumrichtung in seinen äußeren Abmaßen ein Übermaß bezüglich der inneren Abmaße der Gehäuseaufnahme aufweisen, so dass beim Einführen des Brennkammergehäuses in die Gehäuseaufnahme ein nach innen gerichteter Druck auf das Brennkammergehäuse ausgeübt wird, um jenes Übermaß aufzuheben, wobei der erwähnte mindestens eine Abschnitt des Brennkammergehäuses in einen zugeordneten Expansionsraum hinein deformiert wird.

Dabei kann die Deformation des Brennkammergehäuses dadurch auf solche Abschnitte des Brennkammergehäuses konzentriert werden, die jeweils in einen zugeordneten Expansionsraum hinein deformierbar sind, dass das Brennkammergehäuse außerhalb solcher Abschnitte jeweils mit seiner äußeren Oberfläche definiert an der inneren Oberfläche der Gehäuseaufnahme anliegt. Eine bereichsweise Anlage des Brennkammergehäuses an der Gehäuseaufnahme wirkt außerhalb der vorgenannten Abschnitte einer Deformation des Brennkammergehäuses entgegen.

Die zur Bildung eines Expansionsraumes vorgesehene Ausformung kann beispielsweise als Vertiefung an der inneren Oberfläche der Gehäuseaufnahme vorgesehen sein, in die hinein ein Abschnitt des Brennkammergehäuses deformierbar ist. Andererseits kann die mindestens eine Ausformung auch durch eine Vertiefung an der äußeren Oberfläche des Brennkammergehäuses gebildet werden, in die ein Abschnitt des Brennkammergehäuses selbst hinein deformierbar ist, wobei jener Abschnitt des Brennkammergehäuses unmittelbar an die Vertiefung angrenzt bzw. einen Teil der Begrenzungswand jener Vertiefung bildet.

Gemäß einer Ausführungsform der Erfindung weist das Brennkammergehäuse einen rohrförmigen Mantel auf und ist in einer Gehäuseaufnahme anzuordnen, deren innere Oberfläche an der äußeren Oberfläche des rohrförmigen Mantels anliegt - ausgenommen solche Teilbereiche, in denen das Brennkammergehäuse oder die Gehäuseaufnahme eine Ausformung zur Definition eines Expansionsraumes aufweist. Das Brennkammergehäuse kann dabei insbesondere entlang der Rohrachse in die Gehäuseaufnahme einschiebbar sein. In diesem Fall erstreckt sich eine jeweilige Ausformung bevorzugt entlang der Rohrachse zumindest entlang eines Teiles der Länge des rohrförmigen Mantels, gegebenenfalls entlang der vollständigen Länge des Mantels.

In einer jeweiligen Ausformung sowie dem hierein zu deformierenden Abschnitt des Brennkammergehäuses sind vorteilhaft keine Austrittsbereiche bzw. -öffnungen ausgebildet, so dass die vorgesehene Deformation eines Abschnittes des Brennkammergehäuses nicht zu einer undefinierte Lage der Austrittsbereiche bzw. Austrittsöffnungen führen kann.

Das Brennkammergehäuse kann für eine Deformierbarkeit mindestens eines Abschnittes des Brennkammergehäuses in einen hierfür vorgesehenen Expansionsraum hinein zumindest abschnittsweise plastisch und/oder elastisch deformierbar ausgebildet sein.

Das Brennkammergehäuse muss dabei nicht zusammen mit zugehörigen weiteren Komponenten, wie zum Beispiel einer Zündeinrichtung, in einen Gasgenerator integriert sein, so dass die Gehäuseaufnahme durch ein spezielles Generatorgehäuse gebildet wird. Vielmehr kann auch vorgesehen sein, dass die Brennkammer separat bzw. unabhängig von weiteren Komponenten eines Gasgenerators unmittelbar in einer Aufnahme eines Modulgehäuses angeordnet ist, an bzw. in dem weiterhin der aufzublasende Gassack vorgesehen ist, oder die Brennkammer kann in einer speziell hierfür ausgestalteten Fahrzeugumgebung, wie zum Beispiel einem Bereich einer Instrumententafel oder einer seitlichen Türstruktur, als Gehäuseaufnahme vorgesehen sein.

Weitere Einzelheiten und Vorteile der Erfindung werden bei der nachfolgenden Beschreibung von Ausführungsbeispielen anhand der Figuren deutlich werden.

Es zeigen:
- Fig. 1a: ein Brennkammergehäuse einer Brennkammer für ein Airbagmodul in perspektivischer Darstellung;
- Fig. 1b: einen Querschnitt durch eine Gehäuseaufnahme für die Brennkammer aus Figur 1a;
- Fig. 1c: einen Längsschnitt durch die Gehäuseaufnahme aus Figur 1b;
- Fig. 1d: die Brennkammer aus Figur 1a angeordnet in der Gehäuseaufnahme aus den Figuren 1b und 1c;
- Fig. 2a: eine Abwandlung der Brennkammer aus Figur 1a in perspektivischer Darstellung;
- Fig. 2b: einen Querschnitt durch eine Gehäuseaufnahme für die Brennkammer aus Figur 2a;
- Fig. 2c: die Brennkammer aus Figur 2a angeordnet in einer Gehäuseaufnahme gemäß Figur 2b;
- Fig. 3: eine Weiterbildung der Brennkammer aus Figur 2a;
- Fig. 4a: einen Querschnitt durch ein Modulgehäuse eines Airbagmodules, das zugleich eine Gehäuseaufnahme zur Aufnahme einer Brennkammer bildet;
- Fig. 4b: einen Längsschnitt durch die Anordnung aus Figur 4a;
- Fig. 5: eine Abwandlung der Anordnung aus den Figuren 4a und 4b im Längsschnitt.

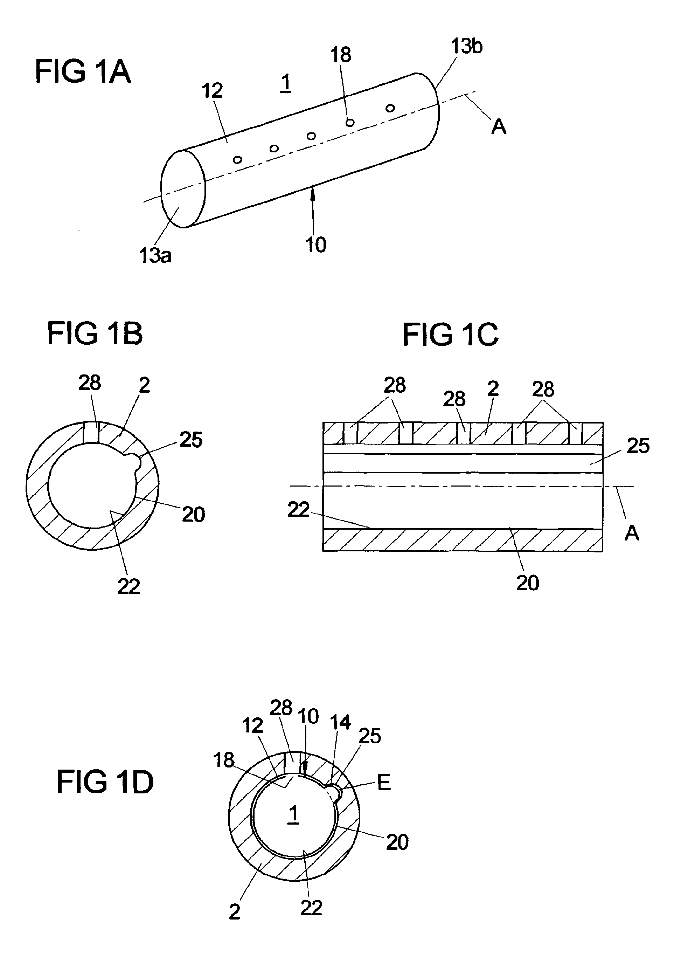

Figur 1a zeigt in perspektivischer Darstellung ein Gehäuse 10 einer Brennkammer 1 für ein Airbagmodul, in dessen Innenraum ein Treibstoff, insbesondere eine so genannte Feststoffladung, anzuordnen ist, mittels der nach Zündung durch chemische Prozesse ein Gas erzeugbar ist, das zum Aufblasen eines Gassackes des Airbagmoduls verwendet wird. Dieser bildet in aufgeblasenem Zustand ein Gaskissen für eine zu schützende Person.

Das Brennkammergehäuse 10 ist im Ausführungsbeispiel rohrförmig ausgebildet, mit einer eine Zylinderfläche bildenden äußeren Oberfläche (Mantelfläche 12), die sich zwischen einer ersten Stirnseite 13a und einer zweiten Stirnseite 13b des Gehäuses 10 entlang einer Rohrachse A erstreckt.

In dem Brennkammergehäuse 10 ist eine Mehrzahl auf der Mantelfläche 12 verteilter Austrittbereiche in Form von Austrittsöffnungen 18 vorgesehen, durch die hindurch in der Brennkammer 1, also in dem von dem Brennkammergehäuse 10 umschlossenen Raum, erzeugtes Gas in die Umgebung austreten kann, um hiermit einen zugeordneten Gassack eines Airbagmodules aufblasen zu können.

Die Brennkammer 1 bzw. deren Brennkammergehäuse 10 ist vorgesehen zur Anordnung in einer Gehäuseaufnahme 2, vergleiche Figuren 1b und 1c, die hierfür einen Aufnahmebereich 20 mit einer inneren Oberfläche 22 aufweist, die an die äußere Mantelfläche 12 des Brennkammergehäuses 10 angepasst ist, so dass das Brennkammergehäuse 10 mit seiner äußeren Mantelfläche 12 an der inneren Oberfläche 22 des Aufnahmebereichs 20 der Gehäuseaufnahme 2 anliegen kann, wenn die Brennkammer 1 in die Gehäuseaufnahme 2 eingesetzt ist, d.h., das Brennkammergehäuse 10 in den Aufnahmebereich 20 eingeführt ist, wie in Figur 1d dargestellt. Hierzu verläuft die innere Oberfläche 22 des Aufnahmebereiches 20 ebenfalls entlang einer Zylinderfläche. Das Einführen des Brennkammergehäuses 10 in den Aufnahmebereich 20 der Gehäuseaufnahme 2 kann z.B. dadurch erfolgen, dass die Brennkammer 1 entlang ihrer Rohrachse A in den Aufnahmebereich 20 eingeschoben wird, wobei sich das Brennkammergehäuse 10 entlang der Längsachse L des Aufnahmebereiches 20 bewegt.

Wie anhand der Figuren 1b, 1c und 1d erkennbar, weist der Aufnahmebereich 20 der Gehäuseaufnahme 2 eine entlang seiner Längsachse L erstreckte Ausformung 25 in Form einer längserstreckten Rille auf, so dass die innere Oberfläche 22 des Aufnahmebereiches 20 entlang jener Ausformung 25 von ihrer zylindrischen bzw. im Querschnitt kreislinienförmigen Gestalt abweicht.

Die Ausformung 25 definiert gemäß Figur 1d einen Expansionsraum E, in den hinein ein Abschnitt 14 des Brennkammergehäuses 10 deformiert werden kann, wenn die Brennkammer 1 (zur Montage) in den Aufnahmebereich 20 der Gehäuseaufnahme 2 eingeführt wird. Die Deformation eines Abschnittes 14 des Brennkammergehäuses 10 beim Einführen des Brennkammergehäuses 10 in den Aufnahmebereich 20 wird dabei dadurch ausgelöst, dass die Brennkammer 1 in ihrem Querschnitt, also im Ausführungsbeispiel in ihrer radialen Ausdehnung bezogen auf die Rohrachse A, ein gewisses Übermaß bezüglich des Aufnahmebereiches 20, also im Ausführungsbeispiel bezüglich des Innendurchmessers des Aufnahmebereiches 20, aufweist. Hierdurch liegt beim Einführen des Brennkammergehäuses 10 in den Aufnahmebereich 20 die äußere Mantelfläche 12 des Brennkammergehäuses 10 nach Art einer Presspassung fest an der inneren Oberfläche 22 des Aufnahmebereiches 20 an, so dass diese innere Oberfläche 22 in radialer Richtung - bezogen auf die Rohrachse A bzw. die Längsachse L - eine Kraft auf die äußere Mantelfläche 12 des Brennkammergehäuses 10 nach innen ausübt. Unter der Wirkung dieser Kraft hat das entsprechend dünnwandige, bevorzugt aus Metall, insbesondere aus Aluminium, Kupfer oder Stahl, bestehende Brennkammergehäuse 10 die Tendenz, sich zu verformen. Hierzu ist das Brennkammergehäuse 10 zumindest im Bereich eines jeweiligen zu deformierenden Abschnittes 14 des Brennkammergehäuses 10 elastisch oder plastisch deformierbar ausgebildet.

Dadurch dass das Brennkammergehäuse 10 jedoch mit seiner äußeren Mantelfläche 12 nahezu vollständig an der inneren Oberfläche 22 des Aufnahmebereiches 20 anliegt, erfolgt die Deformation des Brennkammergehäuses 10 gezielt in mindestens einem Abschnitt 14, der bei einem durch die Ausformung 25 des Aufnahmebereiches 20 gebildeten Expansionsraum E liegt, vergleiche Figur 1d. Die Deformation jenes Abschnittes 14 erreicht dabei selbsttätig ein solches Ausmaß, dass anschließend das Brennkammergehäuse 10 mit seiner äußeren Mantelfläche 12 an der inneren Oberfläche 22 des Aufnahmebereiches 20 der Gehäuseaufnahme 2 anliegt, ohne dass hierbei noch so große Druckkräfte wirkten, die eine weitere Deformation jenes Abschnittes 14 des Brennkammergehäuses 10 zur Folge hätten.

Mit anderen Worten ausgedrückt, schmiegt sich die äußere Mantelfläche 12 des Brennkammergehäuses 10 bei dessen Einführen in die Gehäuseaufnahme 2 gezielt an die innere Oberfläche 22 des Aufnahmebereiches 20 an, wobei gleichzeitig ein Abschnitt 14 des Brennkammergehäuses 10 in den durch die Ausformung 25 des Aufnahmebereiches 20 gebildeten Expansionsraum E hinein deformiert wird. Hierdurch können beim Einbringen der Brennkammer 1 in die Gehäuseaufnahme 2 Bauraumtoleranzen aufgefangen werden; und es ist stets eine definierte Anlage der äußeren Mantelfläche 12 der Brennkammer 1 an der inneren Oberfläche 22 der Gehäuseaufnahme 2 gewährleistet. Weiterhin ist das Brennkammergehäuse 10 in Umfangsrichtung gezielt bezüglich der Gehäuseaufnahme 2 bzw. deren Aufnahmebereich 20 ausgerichtet, so dass einander zugeordnete Austrittsöffnungen 18, 28 des Brennkammergehäuses 10 und der Gehäuseaufnahme 20 definiert zueinander positioniert sind und diese Relativlage auch dann beibehalten, wenn bei Erzeugung eines Gases im Inneren der Brennkammer 1 entsprechend große Drücke wirken.

Während der Erzeugung eines Gases im Inneren des Brennkammergehäuses 10 legt sich dieses unter der Wirkung des mit der Gaserzeugung verbundenen Druckes noch fester an die innere Oberfläche 22 des Aufnahmebereiches 20 an, wobei jedoch keine ungewollten Änderungen der relativen Lage der Brennkammer 1 bezüglich der Gehäuseaufnahme 2 herbeigeführt werden, da ja die Brennkammer 1 über ihren deformierten Abschnitt 14 formschlüssig in mindestens eine Ausformung 25 an der inneren Oberfläche 22 der Gehäuseaufnahme 2 eingreift. Hierdurch wird auch im Betrieb der Brennkammer 1 eine dauerhafte definierte Positionierung der brennkammerseitigen Austrittsöffnungen 18 bezüglich der gehäuseaufnahmeseitigen Austrittsöffnungen 28 gewährleistet. Dabei ist insbesondere zweckmäßig, wenn die vergleichsweise dünnwandige und leichter verformbare Brennkammer 1 stets in vollflächigem Kontakt mit der umgebenden inneren Oberfläche 22 der Gehäuseaufnahme 2 steht.

So wird sichergestellt, dass durch die Austrittsöffnungen 18 des Brennkammergehäuses 10 austretendes Gas anschließend seinen Weg durch die zugeordneten Austrittsöffnungen 28 der Gehäuseaufnahme 2 findet.

Anstelle einer einzelnen Verformung 25 können dabei auch mehrere entlang des Umfangs des Aufnahmebereiches 20 verteilte Ausformungen vorgesehen sein, in die hinein sich (jeweils) ein Abschnitt 14 des Brennkammergehäuses 10 verformen kann. Auch die konkrete geometrische Gestalt, die räumliche Lage sowie die Ausdehnung jener Ausformungen 25 kann variiert werden.

Ferner können gegebenenfalls im Bereich solcher Abschnitte 14 des Brennkammergehäuses 10, die jeweils in eine zugeordnete Ausformung 25 hinein deformiert werden sollen, Materialschwächungen, z. B. in Form von Einprägungen, vorgesehen sein, um eine gezielte Deformation des Brennkammergehäuses 10 in bestimmten Abschnitten 14 zu befördern.

Die Gehäuseaufnahme 2 besteht, verglichen mit dem Brennkammergehäuse 10, aus einem formstabileren Material, so dass sich das Brennkammergehäuse 10 (einschließlich seiner deformierten Abschnitte 14) an der inneren Oberfläche 22 des Aufnahmebereiches 20 (einschließlich dessen mindestens einer Ausformung 25) abstützen kann, wobei die Gehäuseaufnahme 2 insbesondere dem Druck standhalten muss, der auftritt, wenn im Inneren des Brennkammergehäuses 10 eine Feststoffladung durch chemische Prozesse in ein Druckgas umgesetzt wird.

Die Gehäuseaufnahme besteht z.B. aus einem hinreichen festen Kunststoff oder Magnesium und kann beispielsweise einen Bestandteil eines Modulgehäuses bilden, das im Übrigen zur Aufnahme des mittels des erzeugten Gases aufzublasenden Gassackes dient.

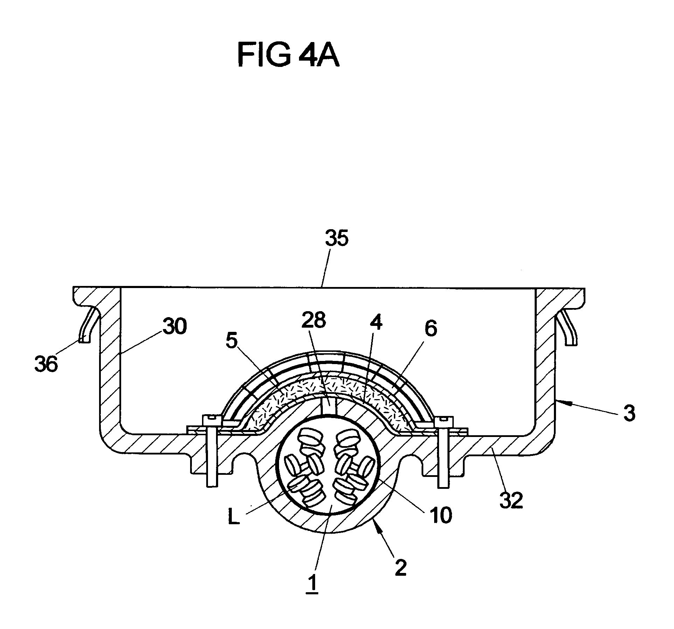

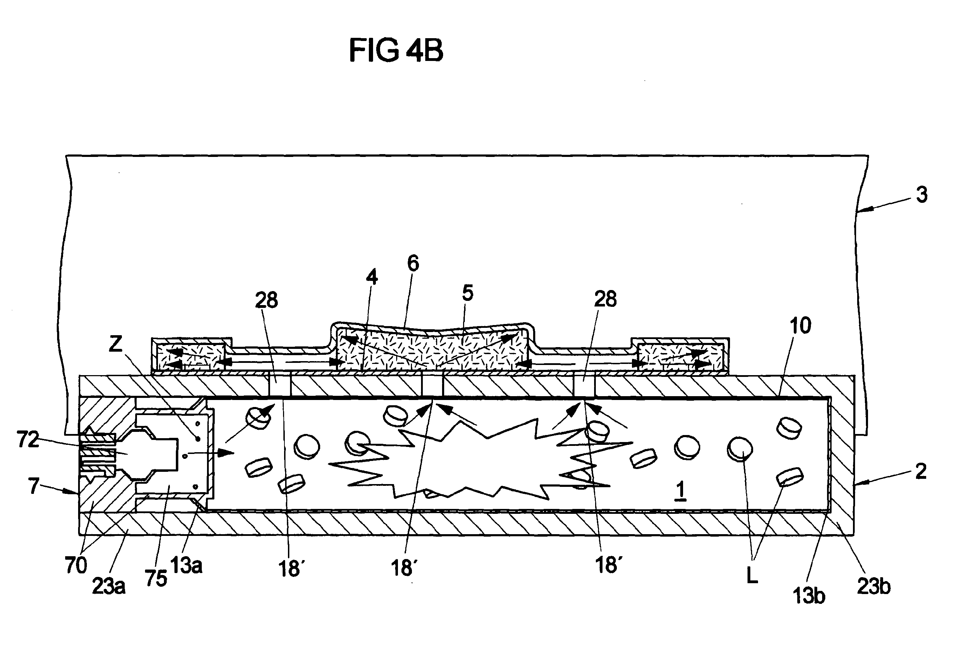

Somit kann insbesondere die Brennkammer 1 mit dem Brennkammergehäuse 10 und dem darin angeordneten Treibstoff, z. B. in Form eines Feststoffes, separat von den übrigen Komponenten eines zur Gaserzeugung dienenden Gasgenerators unmittelbar in einem Modulgehäuse angeordnet sein, das im Übrigen der Aufnahme vom Gasgenerator unabhängiger Komponenten, wie z. B. eines aufzublasenden Gassackes, dient, vergl. die nachfolgenden Erläuterungen zu den Figuren 4a und 4b.

Vorteilhaft sind in den zu deformierenden Abschnitten 14 des Brennkörpergehäuses 10 sowie in den zugeordneten Ausformungen 25, in die hinein eine Deformation der besagten Abschnitte 14 erfolgen kann, keine Austrittsöffnungen vorgesehen.

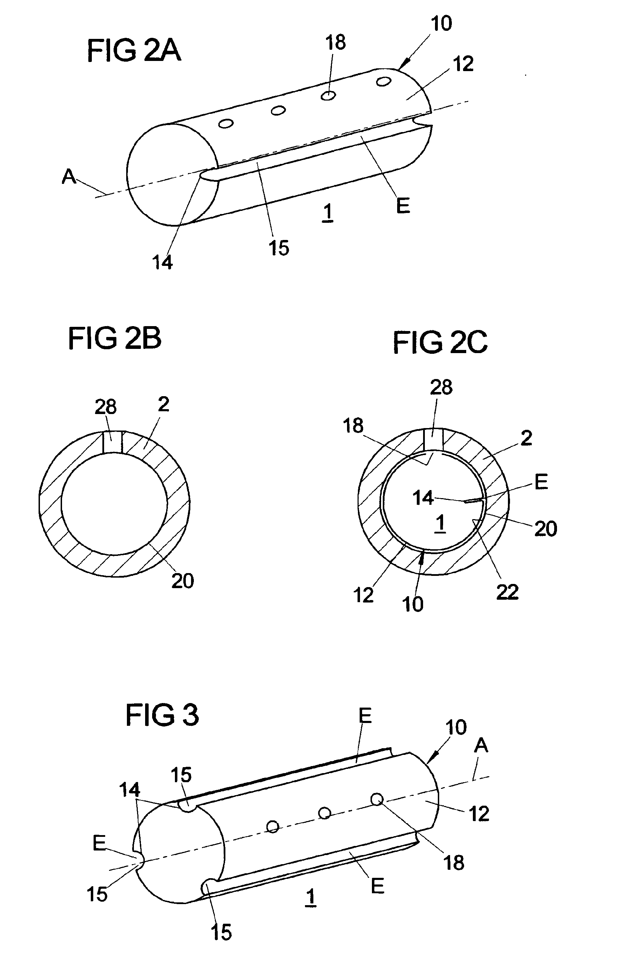

In den Figuren 2a bis 2c ist eine Abwandlung der Anordnung aus den Figuren 1a bis 1d dargestellt, wobei der wesentliche Unterschied darin besteht, dass gemäß den Figuren 2a bis 2c die mindestens eine einen Expansionsraum E bildende Ausformung 15 in der äußeren Mantelfläche 12 der Brennkammer 1 und nicht - wie im Fall er Figuren 1a bis 1c - in der inneren Oberfläche 22 der Gehäuseaufnahme 2 vorgesehen ist. Daher verformt sich hier, wie anhand Figur 2c erkennbar, beim Einführen des (ein gewisses Übermaß bezüglich der Gehäuseaufnahme 2 aufweisenden) Brennkammergehäuses 10 in den Aufnahmebereich 20 der Gehäuseaufnahme 2 ein Abschnitt 14 des Brennkammergehäuses 10 in die von einer Ausformung 15 des Brennkammergehäuses 10 selbst gebildeten Expansionsraum E hinein, welcher dadurch - ebenso wie im Fall der Figur 1d - zumindest teilweise mit Material des Brennkammergehäuses 10 ausgefüllt wird. Der zu deformierende Abschnitt 14 bildet dabei vorliegend einen Bestandteil des mit einer Ausformung 15 versehenen Bereiches des Brennkammergehäuses 10 bzw. grenzt zumindest an diesen an, so dass eine Deformation jenes Abschnittes 14 in den durch die Ausformung 15 gebildeten Expansionsraum E möglich ist.

Figur 3 zeigt schließlich eine Weiterbildung des Brennkammergehäuses 10 aus Figur 2a, bei der entlang des Umfangs des Brennkammergehäuses 10 eine Mehrzahl jeweils einen Expansionsraum E bildender Ausformungen 15 sowie eine Mehrzahl in einen jeweiligen Expansionsraum E hinein deformierbarer Materialabschnitte 14 hintereinander angeordnet sind, wobei sich die einzelnen Materialabschnitte 14 bzw. Ausformungen 15 jeweils entlang der Rohrachse A des Brennkörpergehäuses 10 (und dabei über einen Teil von dessen Länge oder über dessen volle Länge) erstrecken.

Wie bereits erwähnt, kann auch bei den in den Figuren 1a bis 1d gezeigten Ausführungsbeispielen eine Mehrzahl Ausformungen 25 entlang des Umfangs des Aufnahmebereiches 20 der Gehäuseaufnahme 2 hintereinander angeordnet sein, wobei dann entsprechende, zu deformierende Abschnitte 14 an der äußeren Mantelfläche 12 des Brennkammergehäuses vorzusehen sind.

In den Figuren 4a und 4b ist eine Gehäuseaufnahme 2 für eine Brennkammer 1 dargestellt, die konkret an einem Modulgehäuse 3 für ein Airbagmodul ausgebildet ist.

Das (z.B. aus Kunststoff oder aus Magnesium bestehende) Modulgehäuse 3 bildet in bekannter Weise einen Raum 30 zur Aufnahme eines zu einem Gassackpaket zusammengefalteten Gassackes eines Airbagmodules und weist eine Bodenfläche 32, von der Seitenwände des Modules 3 abstehen, sowie eine durch eine Modulabdeckung verschließbare und der Bodenfläche 32 gegenüberliegende offene Deckfläche 35 auf. Zur Fixierung einer Modulabdeckung am Modulgehäuse 3 sind Formschlussmittel 36 in Form von Rasthaken vorgesehen, die von den Seitenwänden des Modulgehäuses 3 im Bereich der offenen Deckfläche 35 abstehen.

An der Bodenfläche 32 des Modulgehäuses 3 ist einstückig eine längserstreckte, rohrförmige Gehäuseaufnahme 2 angeformt, die sich zwischen einer ersten und einer zweiten Stirnseite 23a, 23b erstreckt und in der die Brennkammer 1 mit ihrem Gehäuse 10 aufgenommen ist.

Die Brennkammer 1 bzw. deren Gehäuse 10 erstrecken sich dabei nicht entlang der gesamten Länge der Gehäuseaufnahme 2. Vielmehr ist die Ausdehnung der Brennkammer 1 in Erstreckungsrichtung der Gehäuseaufnahme 2 kleiner als die entsprechende Ausdehnung der Gehäuseaufnahme 2 selbst. D.h., die beiden Stirnseiten 23a, 23b (axiale Endabschnitte) der Gehäuseaufnahme 2 weisen einen größeren axialen Abstand auf als die beiden Stirnseiten 13a, 13b (axiale Endabschnitte) des in der Gehäuseaufnahme 2 aufgenommenen Brennkammergehäuses 10, in dem ein Treibstoff in Form einer Feststoffladung L vorgesehen ist.

Ein frei bleibender Bereich an einer Stirnseite 23a bzw. einem axialen Endabschnitt der Gehäuseaufnahme 2 dient zur Aufnahme einer Zündeinrichtung 7, die in einem Gehäuse 70 einen Anzünder 72 sowie einen Raum 75 zur Aufnahme eines Zündmittels aufweist. Das Anzündergehäuse 70 ist (gasdicht) mit einer Stirnseite 13a bzw. einem axialen Endabschnitt des Brennkammergehäuses 10 verbunden.

Eine Besonderheit der in den Figuren 4a und 4b dargestellten Anordnung liegt darin, dass kein vom Modulgehäuse 3 separates, eigenständiges Generatorgehäuse für einen Gasgenerator vorgesehen ist, sondern dass vielmehr die Brennkammer 1 mit Ihrem Gehäuse 10 und dem Treibstoff in Form einer Feststoffladung L einerseits sowie die Zündeinrichtung 7 andererseits als zwei Baugruppen in einer einstückig am Modulgehäuse 3 angeformte Gehäuseaufnahme 2 für die Brennkammer 1 und die Zündeinrichtung 7 angeordnet sind.

Eine weitere Besonderheit besteht darin, dass in dem Brennkammergehäuse 10 anfangs keine Austrittsöffnungen für Gase vorgesehen sind, die nach Zündung des in der Brennkammer 1 angeordneten Treibstoffes freigesetzt werden. Vielmehr sind lediglich in der Brennkammeraufnahme 2 von Anfang an Austrittsöffnungen 28 vorgesehen, durch die hindurch in der Brennkammer 1 erzeugte Gase in einen aufzublasenden Gassack geleitet werden können.

Brennkammergehäuseseitig werden entsprechende Austrittsöffnungen 18' erst gebildet, wenn nach Zündung des in der Brennkammer 1 vorgesehenen Treibstoffes durch die Zündeinrichtung 7 und der damit einhergehenden Erzeugung eines Gases der Druck in der Brennkammer 1 so stark zugenommen hat, dass das Material des dünnwandigen Brennkammergehäuses 10 an den Stellen, an denen es nicht durch die Gehäuseaufnahme 2 abgestützt ist, also an den dem Brennkammergehäuse 10 zugewandten Seiten der gehäuseaufnahmeseitigen Austrittsöffnungen 28 bürst, so dass dort Austrittsöffnungen 18' gebildet werden, die sich mit den gehäuseaufnahmeseitigen Austrittsöffnungen 28 überdecken.

Somit können die in der Brennkammer 1 nach Zündung des dortigen Treibstoffes freigesetzten Gase durch die gerade erst gebildeten brennkammergehäuseseitigen Austrittsöffnungen 18' und die gehäuseaufnahmeseitigen Austrittsöffnungen 28 in den zur Aufnahme eines Gassackes dienenden Innenraum 30 des Modulgehäuses 3 strömen, wobei sie über ein Hitzeschild 4, einen Filter 5 und einen Diffusor 6 in den aufzublasenden Gassack geführt werden.

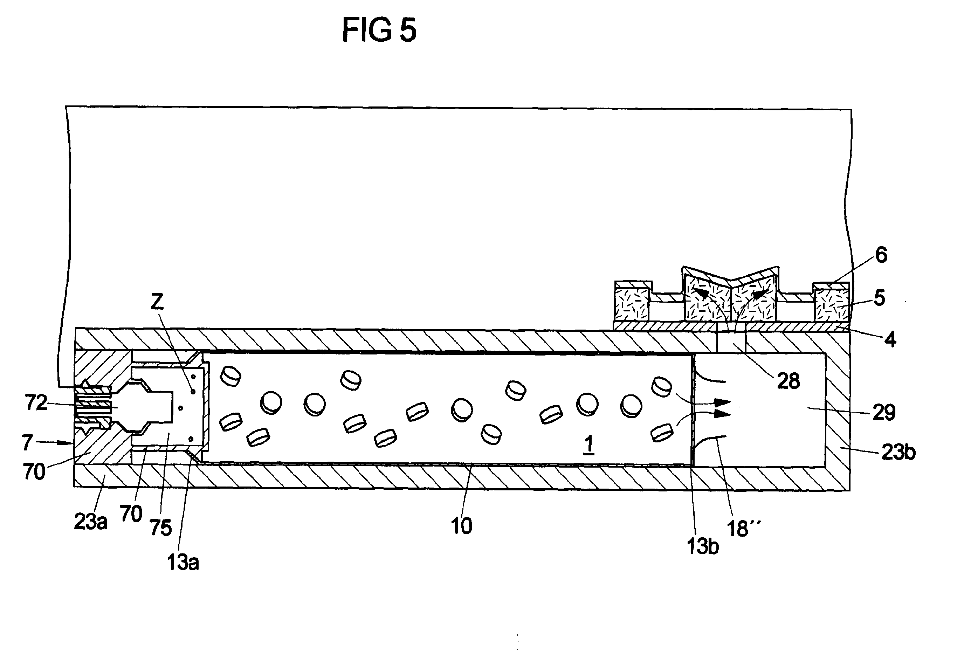

In Figur 5 ist eine Abwandlung der Anordnung aus den Figuren 4a und 4b dargestellt, bei der mindestens eine sich im Brennkammergehäuse 10 (unter Gasdruck) bildende Austrittsöffnung 18" nicht - wie im Fall der Figuren 4a und 4b - in der Mantelfläche des Brennkammergehäuses 10 sondern vielmehr derart an einer Stirnseite 13b des Brennkammergehäuses 10 vorgesehen ist, dass die in der Brennkammer 1 erzeugten Gase hieraus entlang der durch die Brennkammer 1 definierten Rohrachse austreten können.

Während also bei den zuvor erörterten Ausführungsbeispielen die Austrittsöffnungen 18, 18' des Brennkammergehäuses 10 jeweils an dessen Mantelfläche so ausgebildet sind, dass die Gase aus jenen Austrittsöffnungen 18, 18' jeweils in radialer Richtung bezogen auf die durch das Brennkammergehäuse 10 definierte Rohrachse austreten, ist bei dem in Figur 5 gezeigten Ausführungsbeispiel mindestens eine Austrittsöffnung 18" derart stirnseitig am Brennkammergehäuse 10 angeordnet, dass in der Brennkammer 1 erzeugte Gase durch diese Austrittsöffnung 18" in axialer Richtung (entlang der Rohrachse) austreten können. Sie gelangen dann in eine an einer Stirnseite 23b der Gehäuseaufnahme 2 vorgesehene Kammer 24, aus der sie durch mindestens eine gehäuseaufnahmeseitige Austrittsöffnung 28 (in radialer Richtung) in einen aufzublasenden Gassack strömen können, und zwar wiederum über ein Hitzeschild 4, einen Filter 5 und einen Diffusor 6. Die besagte Kammer 24 liegt dabei benachbart neben der Stirnseite 13b des Brennkammergehäuses 10, in der aufgrund des Gasdruckes in der Brennkammer 1 erzeugter Gase die mindestens eine brennkammergehäuseseitige Austrittsöffnung 18" gebildet wird.

## Patentansprüche

1. Brennkammerbaueinheit für ein Airbagmodul eines Kraftfahrzeugs, mit
- einem eine Brennkammer umschließenden Brennkammergehäuse und
- einer Gehäuseaufnahme, in der das Brennkammergehäuse derart anzuordnen ist, dass sich das Brennkammergehäuse mit seiner äußeren Oberfläche entlang einer inneren Oberfläche der Gehäuseaufnahme erstreckt, wobei in dem Brennkammergehäuse einerseits und der Gehäuseaufnahme andererseits jeweils Austrittsbereiche vorgesehen sind, die bei bestimmungsgemäßer Anordnung des Brennkammergehäuses in der Gehäuseaufnahme einander derart räumlich zugeordnet sind, dass in der Brennkammer erzeugtes Gas durch die Austrittsbereiche des Brennkammergehäuses und der Gehäuseaufnahme zum Befüllen eines Gassackes austreten kann,
**dadurch gekennzeichnet,**
**dass** am Brennkammergehäuse (10) und/oder an der Gehäuseaufnahme (2) mindestens eine Ausformung (15, 25) derart ausgebildet ist, dass im Bereich der Ausformung (15, 25) zwischen der äußeren Oberfläche (12) des Brennkammergehäuses (10) und der inneren Oberfläche (22) der Gehäuseaufnahme (2) ein Expansionsraum (E) definiert ist, der beim bestimmungsgemäßen Anordnen des Brennkammergehäuses (10) in der Gehäuseaufnahme (2) durch Deformation eines Abschnittes (14) des Brennkammergehäuses (10) zumindest teilweise mit Material aus jenem Abschnitt (14) des Brennkammergehäuses (10) gefüllt wird.

2. Brennkammerbaueinheit nach Anspruch 1, **dadurch gekennzeichnet, dass** das Brennkammergehäuse (10) bezüglich der Gehäuseaufnahme (2) so dimensioniert ist, dass beim Anordnen des Brennkammergehäuses (10) in der Gehäuseaufnahme (1) die innere Oberfläche (22) der Gehäuseaufnahme (2) einen nach innen gerichteten Druck auf die äußere Oberfläche (12) des Brennkammergehäuses (10) ausübt und das Brennkammergehäuse (10) hierdurch in mindestens einem Abschnitt (14) in einen zugeordneten Expansionsraum (E) hinein deformiert wird.

3. Brennkammerbaueinheit nach einem der vorhergehenden Ansprüche, **dadurch gekennzeichnet, dass** die Deformation des Brennkammergehäuses (10) auf solche Abschnitte (14) des Brennkammergehäuses (10) konzentriert wird, die in einen Expansionsraum (E) hinein deformierbar sind, indem das Brennkammergehäuse (10) außerhalb solcher Abschnitte (14) mit seiner äußeren Oberfläche (12) an einer inneren Oberfläche (22) der Gehäuseaufnahme (2) anliegt.

4. Brennkammerbaueinheit nach einem der vorhergehenden Ansprüche, **dadurch gekennzeichnet, dass** mindestens eine Ausformung (25) eine Vertiefung an der inneren Oberfläche (22) der Gehäuseaufnahme (2) bildet, in die ein Abschnitt (14) des Brennkammergehäuses (10) hinein deformierbar ist.

5. Brennkammerbaueinheit nach einem der vorhergehenden Ansprüche, **dadurch gekennzeichnet, dass** mindestens eine Ausformung (15) eine Vertiefung an der äußeren Oberfläche (12) des Brennkammergehäuses (10) bildet, in die hinein ein Abschnitt (14) des Brennkammergehäuses (10) deformierbar ist.

6. Brennkammerbaueinheit nach einem der vorhergehenden Ansprüche, **dadurch gekennzeichnet, dass** das Brennkammergehäuse (10) eine rohrförmige, insbesondere entlang einer Zylinderfläche erstreckte, äußere Mantelfläche (12) aufweist.

7. Brennkammerbaueinheit nach Anspruch 6, **dadurch gekennzeichnet, dass** sich die Ausformung (15, 25) entlang der Rohrachse (A) erstreckt.

8. Brennkammerbaueinheit nach einem der vorhergehenden Ansprüche, **dadurch gekennzeichnet, dass** die Gehäuseaufnahme (2) eine größere Stabilität gegenüber dem Druck in der Brennkammer (1) erzeugter Gase aufweist als das Brennkammergehäuse (10), so dass das Brennkammergehäuse (10) unter der Wirkung des Druckes in der Brennkammer (1) erzeugter Gase **dadurch** stabilisiert werden kann, dass sich das Brennkammergehäuse (10) mit seiner äußeren Oberfläche (12) an der inneren Oberfläche (22) der Gehäuseaufnahme (2) abstützt.

9. Brennkammerbaueinheit nach einem der vorhergehenden Ansprüche, **dadurch gekennzeichnet, dass** im Brennkammergehäuse (10) und in der Gehäuseaufnahme (2) Austrittsöffnungen (18, 28), die die Austrittsbereiche bilden, bereits vor der Erzeugung eines Gases in der Brennkammer (1) vorgesehen sind.

10. Brennkammerbaueinheit nach einem der vorhergehenden Ansprüche 1 bis 8, **dadurch gekennzeichnet, dass** die Austrittsbereiche durch Austrittsöffnungen (18', 18"; 28) gebildet werden und in der Gehäuseaufnahme (2) bereits vor der Erzeugung eines Gases in der Brennkammer (1) Austrittsöffnungen (28) vorgesehen sind und dass im Brennkammergehäuse (10) Austrittsöffnungen (18', 18") erst durch den Druck in der Brennkammer (1) erzeugter Gase gebildet werden.

11. Brennkammerbaueinheit nach einem der vorhergehenden Ansprüche, **dadurch gekennzeichnet, dass** die mindestens einen Ausformung (15, 25) frei von Austrittsbereichen ist.

12. Brennkammerbaueinheit nach einem der vorhergehenden Ansprüche, **dadurch gekennzeichnet, dass** der mindestens eine zu deformierende Abschnitt (14) des Brennkammergehäuses (10) frei von Austrittsbereichen ist.

13. Brennkammerbaueinheit nach einem der vorhergehenden Ansprüche, **dadurch gekennzeichnet, dass** die Gehäuseaufnahme (2) einen einstückigen Bestandteil eines Modulgehäuses (3) eines Airbagmodules bildet.

14. Brennkammerbaueinheit nach einem der vorhergehenden Ansprüche, **dadurch gekennzeichnet, dass** der Brennkammer (1) eine Zündeinrichtung (7) zur Zündung eines in der Brennkammer (1) vorgesehenen Treibstoffes (L) zugeordnet ist und dass die Brennkammer (1) und die Zündeinrichtung (7) als separate Baugruppen miteinander verbunden sind.

15. Brennkammerbaueinheit nach Anspruch 13 und 14, **dadurch gekennzeichnet, dass** die Brennkammer (1) und die Zündeinrichtung (7) in der am Modulgehäuse (3) angeformten Gehäuseaufnahme (2) angeordnet sind.

## Claims

1. Combustion chamber unit for an airbag module of a motor vehicle comprising
- a combustion chamber housing enclosing a combustion chamber, and
- a housing receptacle in which the combustion chamber housing is to be arranged in such a way that the combustion chamber housing extends with its outer surface along an inner surface of the housing receptacle, wherein discharge regions are respectively provided on the one hand in the combustion chamber housing and on the other hand in the housing receptacle which discharge regions, by the arrangement of the combustion chamber housing in the housing receptacle in accordance with its intended purpose, are spatially associated with one another in such a way that gas generated in the combustion chamber can discharge through the discharge regions of the combustion chamber housing and of the housing receptacle in order to inflate the gas bag,
**characterized in that**
at least one indentation (15, 25) is formed on the combustion chamber housing (10) and/or on the housing receptacle (2) in such a way that an expansion space (E) is defined in the area of the indentation (15, 25) between the outer surface (12) of the combustion chamber housing (10) and the inner surface (22) of the housing receptacle (2) which expansion space (E), upon arranging the combustion chamber housing (10) in the housing receptacle (2) in accordance with its intended purpose and by deformation of a section (14) of the combustion chamber housing (10), is at least partially filled with material from said section (14) of the combustion chamber housing (10).

2. Combustion chamber unit according to claim 1, **characterized in that** the combustion chamber housing (10) is dimensioned with respect to the housing receptacle (2) such that the inner surface (22) of the housing receptacle (2), upon arranging the combustion chamber housing (10) in the housing receptacle (2), exerts a pressure directed inwards on the outer surface (12) of the combustion chamber housing (10) and the combustion chamber housing (10) in at least one section is thereby deformed into the associated expansion space (E).

3. Combustion chamber unit according to one of the preceding claims, **characterized in that** the deformation of the combustion chamber housing (10) is concentrated on such sections (14) of the combustion chamber housing (10) which can be deformed into an expansion space (E) by means of the combustion chamber housing (10) abutting with its outer surface (12) on an inner surface (22) of the housing receptacle (2) outside such sections (14).

4. Combustion chamber unit according to one of the preceding claims, **characterized in that** at least one indentation (25) forms a depression at the inner surface (22) of the housing receptacle (2) into which depression a section (14) of the combustion chamber housing (10) is deformable.

5. Combustion chamber unit according to one of the preceding claims, **characterized in that** at least one indentation (15) forms a depression at the outer surface (12) of the combustion chamber housing (10) into which depression a section (14) of the combustion chamber housing (10) is deformable.

6. Combustion chamber unit according to one of the preceding claims, **characterized in that** the combustion chamber housing (10) comprises a tubular outer shell surface (12) in particular an outer shell surface extending along a cylinder's surface.

7. Combustion chamber unit according to claim 6, **characterized in that** the indentation (15, 25) extends along the tube axis (A).

8. Combustion chamber unit according to one of the preceding claims, **characterized in that** the housing receptacle has a greater stability against the pressure of gases generated in the combustion chamber (1) than the combustion chamber housing (10) so that the combustion chamber housing (10) under the influence of the pressure of the gases generated in the combustion chamber (1) can be stabilized **in that** the combustion chamber housing (10) rests with its outer surface (12) on the inner surface (22) of the housing receptacle (2).

9. Combustion chamber unit according to one of the preceding claims, **characterized in that** discharge openings (18, 28) forming the discharge regions (18, 18', 18"; 28) are provided in the combustion chamber housing (10) and in the housing receptacle (2) already before the generation of a gas in the combustion chamber (1).

10. Combustion chamber unit according to one of the preceding claims 1 to 8, **characterized in that** the discharge regions are formed by discharge openings (18', 18"; 28) and discharge openings (28) are already provided in the housing receptacle (2) before the generation of a gas in the combustion chamber (1) and that discharge openings (18', 18") are only formed by means of the pressure of the gases generated in the combustion chamber (1).

11. Combustion chamber unit according to one of the preceding claims, **characterized in that** the at least one indentation (15, 25) is free of discharge regions.

12. Combustion chamber unit according to one of the preceding claims, **characterized in that** the at least one section (14) of the combustion chamber housing (10) to be deformed is free of discharge regions.

13. Combustion chamber unit according to one of the preceding claims, **characterized in that** the housing receptacle (2) forms an integral component of a module housing (3) of an airbag module.

14. Combustion chamber unit according to one of the preceding claims, **characterized in that** an ignition device (7) for the ignition of a propellant (L) provided in the combustion chamber (1) is associated to the combustion chamber (1) and that the combustion chamber (1) and the ignition device (7) are connected to each other as separate assembly groups.

15. Combustion chamber unit according to claim 13 and 14, **characterized in that** the combustion chamber (1) and the ignition device (7) are arranged in the housing receptacle (2) formed at the module housing (3).

## Revendications

1. Ensemble chambre de combustion pour un module de sac gonflable d'un véhicule automobile avec
- un boîtier de chambre de combustion entourant une chambre de combustion et
- un logement de boîtier, dans lequel le boîtier de chambre de combustion est destiné à être disposé de telle sorte que le boîtier de chambre de combustion s'étende avec sa surface extérieure le long d'une surface intérieure du logement de boîtier, dans le boîtier de chambre de combustion d'une part et le logement de boîtier d'autre part étant prévues respectivement des zones de sortie qui lors de l'agencement destiné du boîtier de chambre de combustion dans le logement de boîtier sont disposées dans l'espace les unes par rapport aux autres de telle manière que du gaz généré dans la chambre de combustion puisse sortir par les zones de sortie du boîtier de chambre de combustion et du logement de boîtier pour le remplissage d'un sac à gaz,
**caractérisé en ce**
**que** sur le boîtier de chambre de combustion (10) et/ou sur le logement de boîtier (2) est réalisée au moins une déformation (15, 25) de telle manière que dans la zone de la déformation (15, 25) entre la surface extérieure (12) du boîtier de chambre de combustion (10) et la surface intérieure (22) du logement de boîtier (2) est défini un espace d'expansion (E) qui lors de l'agencement destiné du boîtier de chambre de combustion (10) dans le logement de boîtier (2) est rempli par la déformation d'une section (14) du boîtier de chambre de combustion (10) au moins en partie de matériau de celle-la section (14) du boîtier de chambre de combustion (10).

2. Ensemble chambre de combustion selon la revendication 1, **caractérisé en ce que** le boîtier de chambre de combustion (10) est dimensionné par rapport au logement de boîtier (2) de sorte que lors de l'agencement du boîtier de chambre de combustion (10) dans le logement de boîtier (1), la surface intérieure (22) du logement de boîtier (2) exerce une pression dirigée vers l'intérieur sur la surface extérieure (12) du boîtier de chambre de combustion (10) et le boîtier de chambre de combustion (10) est déformé par là-même dans au moins une section (14) dans un espace d'expansion (E) associé.

3. Ensemble chambre de combustion selon l'une quelconque des revendications précédentes, **caractérisé en ce que** la déformation du boîtier de chambre de combustion (10) est concentrée sur les sections (14) du boîtier de chambre de combustion (10), qui peuvent être déformées dans un espace d'expansion (E) tandis que la surface extérieure (12) du boîtier de chambre de combustion (10) repose en dehors de telles sections (14) sur une surface intérieure (22) du logement de boîtier (2).

4. Ensemble chambre de combustion selon l'une quelconque des revendications précédentes, **caractérisé en ce qu'**au moins une déformation (25) forme une cavité sur la surface intérieure (22) du logement de boîtier (2), dans laquelle une section (14) du boîtier de chambre de combustion (10) peut être déformée.

5. Ensemble chambre de combustion selon l'une quelconque des revendications précédentes, **caractérisé en ce qu'**au moins une déformation (15) forme une cavité sur la surface extérieure (12) du boîtier de chambre de combustion (10), dans laquelle une section (14) du boîtier de chambre de combustion (10) peut être déformée.

6. Ensemble chambre de combustion selon l'une quelconque des revendications précédentes, **caractérisé en ce que** le boîtier de chambre de combustion (10) présente une surface enveloppe (12) extérieure, tubulaire, étirée en particulier le long d'une surface cylindrique.

7. Ensemble chambre de combustion selon la revendication 6, **caractérisé en ce que** la déformation (15, 25) s'étend le long de l'axe tubulaire (A).

8. Ensemble chambre de combustion selon l'une quelconque des revendications précédentes, **caractérisé en ce que** le logement de boîtier (2) présente une plus grande stabilité par rapport à la pression des gaz générés dans la chambre de combustion (1) que le boîtier de chambre de combustion (10) de sorte que le boîtier de chambre de combustion (10) puisse être stabilisé sous l'effet de la pression des gaz générés dans la chambre de combustion (1) du fait que le boîtier de chambre de combustion (10) s'appuie avec sa surface extérieure (12) sur la surface intérieure (22) du logement de boîtier (2).

9. Ensemble chambre de combustion selon l'une quelconque des revendications précédentes, **caractérisé en ce que** des ouvertures de sortie (18, 28) qui forment les zones de sortie, sont déjà prévues avant la génération d'un gaz dans la chambre de combustion (1) dans le boîtier de chambre de combustion (10) et dans le logement de boîtier (2).

10. Ensemble chambre de combustion selon l'une quelconque des revendications 1 à 8, **caractérisé en ce que** les zones de sortie sont formées par des ouvertures de sortie (18', 18" ; 28) et, des ouvertures de sortie (28) sont déjà prévues dans le logement de boîtier (2) avant la génération d'un gaz dans la chambre de combustion (1) et **en ce que** des ouvertures de sortie (18', 18") ne sont formées dans le boîtier de chambre de combustion (10) que par la pression des gaz générés dans la chambre de combustion (1).

11. Ensemble chambre de combustion selon l'une quelconque des revendications précédentes, **caractérisé en ce que** l'au moins une déformation (15, 25) est exempte de zones de sortie.

12. Ensemble chambre de combustion selon l'une quelconque des revendications précédentes, **caractérisé en ce que** l'au moins une section (14) à déformer du boîtier de chambre de combustion (10) est exempte de zones de sortie.

13. Ensemble chambre de combustion selon l'une quelconque des revendications précédentes, **caractérisé en ce que** le logement de boîtier (2) forme une partie d'un seul tenant d'un boîtier (3) de module de sac gonflable

14. Ensemble chambre de combustion selon l'une quelconque des revendications précédentes, **caractérisé en ce qu'**à la chambre de combustion (1) est associé un dispositif d'allumage (7) pour l'allumage d'un propulseur (L) prévu dans la chambre de combustion (1) et **en ce que** la chambre de combustion (1) et le dispositif d'allumage (7) sont reliés entre eux comme des ensembles séparés.

15. Ensemble chambre de combustion selon la revendication 13 ou 14, **caractérisé en ce que** la chambre de combustion (1) et le dispositif d'allumage (7) sont disposés dans le logement de boîtier (2) formé sur le boîtier de module (3).
